# EUROPÄISCHE PATENTSCHRIFT

(11) **EP 0 979 775 B1**
(45) Veröffentlichungstag und Bekanntmachung des Hinweises auf die Patenterteilung: **24.03.2004**
(21) Anmeldenummer: 99115150.7
(22) Anmeldetag: 12.08.1999
(51) Int. Cl.: B64G 1/10, B64G 1/66, H04B 7/185

(54) **Satellitenverband bestehend aus mehreren Modulsatelliten**
Modular satellites in satellite formation
Ensemble coordonné de satellites modulaires

(30) Priorität: 12.08.1998 DE 19836602
(43) Veröffentlichungstag der Anmeldung: 16.02.2000
(73) Patentinhaber: SES Astra S.A., 6815 Château de Betzdorf (LU)
(72) Erfinder: Bethscheider, Gerhard, 54441 Ayl (DE)
(74) Vertreter: Joppich, Martin, Dr.-Ing.

(56) Entgegenhaltungen:
- EP-A- 0 541 052
- GB-A- 2 134 353
- US-A- 4 375 697
- US-A- 5 615 407
- BELLACCINI S ET AL: "SYNCHRONIZATION AND ROUTING ASPECTS IN A CLUSTER OF SATELLITES WITH ON-BOARD PROCESSING" PROCEEDINGS OF THE GLOBAL TELECOMMUNICATIONS CONFERENCE AND EXHIBITION(GLOBECOM),US,NEW YORK, IEEE, Bd. -, 1986, Seiten 1713-1719, XP002003161
- MOLETTE P, COUGNET C, SAINT-AUBERT PH: "Technical and economical comparison between a modular geostationary space platform and a cluster of satellites" ACTA ASTRONAUTICA,Juli 1984 (1984-07) - August 1984 (1984-08), Seiten 771-784, XP000908950

## Beschreibung

Die Erfindung betrifft einen Satellitenverband bestehend aus mindestens zwei Modulsatelliten, die auf derselben Orbitalposition co-positioniert sind, sowie ein Verfahren zum Betreiben eines derartigen Satellitenverbandes von einer Bodenstation.

Bei Satelliten im herkömmlichen Sinne handelt es sich um Flugkörper, die mehrere aufeinander abgestimmte und miteinander zu einer Einheit verbundene Einzelkomponenten aufweisen, zu denen beispielsweise die Stromversorgung, die Lage-, Positions- und Temperaturregelung, das TT&C-Untersystem (Telemetry, Tracking and Command) und der Transponder mit dem Antennenuntersystem als Nutzlast gehören. Der Transponder umfaßt regelmäßig ein Empfangsteil, einen Verarbeitungsteil (On-Board-Processor) und einen Sendeteil, jeweils mit der dazu gehörenden Antenne. Diese Einzelkomponenten, zu denen je nach Anwendungsfall weitere hinzukommen können, werden zu einem Flugkörper, dem Satelliten im herkömmlichen Sinn vereinigt.

Die Leistungsanforderungen an Telekommunikationssatelliten z.B. in Bezug auf die Sendeleistung, die Anzahl der Transponder/Ersatztransponder und der Frequenzbänder führen im Ergebnis dazu, daß Satelliten im herkömmlichen Sinne sehr groß und sehr schwer werden. Diese Satelliten können nur mit den leistungsstärksten und teuersten Trägerraketen (z.B. Ariane 5, Proton, etc.) gestartet werden. Den Anstrengungen, die Größe und das Gewicht der Satelliten im Hinblick auf den Start so weit wie möglich zu reduzieren, laufen die ständig steigenden Anforderungen entgegen, die regelmäßig mit einer Vergrößerung der Struktur und einer Erhöhung des Gewichts der Satelliten im herkömmlichen Sinne verbunden sind.

US-A-4 375 697 beschreibt einen Satellitenverband, dessen Modulsatelliten sternförmig mit einem zentralen Steuersatelliten kommunizieren. Der Steuersatellit steht seinerseits in Verbindung mit einer Bodenkontrollstation und übernimmt damit die Aufgabe der Lagesteuerung und der Nachrichtenvermittlung für die einzelnen Modulsatelliten. Die Möglichkeit einer von den Modulsatelliten getrennten Signalverarbeitung ist dagegen nicht erwähnt.

Ein Problem eines derartigen Satellitenverbandes besteht darin, daß die Steuerung des Satellitenverbandes ausschließlich von dem zentralen Steuersatelliten abhängt. Ein Austausch des zentralen Steuersatelliten ist damit technologisch kompliziert, da die Steuerung bei einem möglichen Austausch des zentralen Steuersatelliten auf einen neuen Satelliten übergeben werden muss.

Aufgabe der Erfindung ist es daher, einen Satellitenverband zu schaffen, der flexibel konfigurierbar ist und der den ständig steigenden Leistungsanforderungen der Übertragungstechnik gerecht wird.

Diese Aufgabe wird durch einen Satellitenverband nach Anspruch 1 und ein Verfahren zum Betreiben eines Satellitenverbandes nach Anspruch 7 gelöst.

Die erfindungsgemäße Lösung weist einen zweiten Modulsatelliten auf, der die Signalverarbeitung von Signalen übernimmt, die von anderen Modulsatelliten an den zweiten Modulsatelliten übermittelt werden. Zudem erfolgt die Kontrolle jedes Modulsatelliten eigenständig von der Bodenstation aus. Mit dem erfindungsgemäßen Satellitenverband ist es somit möglich, die kostenaufwendigen Kommunikationseinrichtungen für eine lange Lebensdauer auszulegen, während der Modulsatellit mit der Signalverarbeitungseinrichtung in Abhängigkeit von neu aufkommenden Rechnertechnologien zu gegebener Zeit ausgetauscht werden kann.

Der Satellitenverband kann aus einem ersten Modulsatelliten bestehen, der eine Einrichtung zur Stromversorgung, zur Regelung der Lage, der Position und der Temperatur und zur Bahnsteuerung des Modulsatelliten, sowie eine erste Nutzlastkomponente und eine erste Kommunikationseinrichtung zum Übertragen von Daten und/oder Signalen zu einem anderen Modulsatelliten umfaßt, und einem zweiten Modulsatelliten, der eine Einrichtung zur Stromversorgung, zur Regelung der Lage, der Position und der Temperatur und zur Bahnsteuerung des Modulsatelliten, sowie eine zweite Nutzlastkomponente und eine zweite Kommunikationseinrichtung zum Übertagen von Daten und/oder Signalen zu einem anderen Modulsatelliten umfaßt.

Gemäß einem im folgenden noch genauer beschriebenen Ausführungsbeispiel umfaßt der modulare Satellit noch einen dritten Modulsatelliten, der eine Einrichtung zur Stromversorgung, zur Regelung der Lage, der Position und der Temperatur und zur Bahnsteuerung des Modulsatelliten, sowie eine dritte Nutzlastkomponente und eine dritte Kommunkationseinrichtung zum Übertragen von Daten und/oder Signalen zu einem anderen Modulsatelliten umfaßt.

Durch die Realisierung der einzelnen Nutzlasten in einzelnen Modulsatelliten wird erreicht, daß der einzelne Modulsatellit ein deutlich geringeres Startgewicht aufweist als ein Satellit im herkömmlichen Sinn, bei dem die erfindungsgemäß auf mehrere Module verteilten Nutzlastkomponenten in einer Einheit zusammengefaßt sind. Betrachtet man das Gesamtgewicht aller Modulsatelliten, die gemeinsam die Funktionalität eines Satelliten im herkömmlichen Sinne bereitstellen, so ist dieses sicherlich höher als das Gewicht des herkömmlichen Satelliten. Das deutlich reduzierte Startgewicht des einzelnen Modulsatelliten jedoch bringt im Hinblick auf die für den Start erforderliche Trägerrakete so viele Vorteile, daß die Erhöhung des Gesamtgewichts weder technisch noch wirtschaftlich einen echten Nachteil darstellt. Zudem sind Anforderungen denkbar, denen ein herkömmlicher Satellit nur bei einer Größe entspricht, die nicht mehr gestartet werden kann.

Mit dem erfindungsgemäßen modularen Satelliten ist überdies ein weiterer Vorteil verbunden, der mit der Lebensdauer modernen Telekommunikationssatelliten einhergeht. Moderne Telekommunikationssatelliten erreichen eine Lebensdauer von bis zu 15 Jahren. Sehr viel kurzlebiger sind aber bestimmte Schlüsseltechnologien, wie z.B. die Signalverarbeitung an Bord des Satelliten (On-Board-Processing). Während bei herkömmlichen Satelliten ein Veraltern des On-Board-Processing sofort bedeutet, daß dieser Satellit für moderne Aufgaben nicht oder nur eingeschränkt genutzt werden kann, bietet der erfindungsgemäße modulare Satellit die Möglichkeit, den Modulsatelliten, auf dem das On-Board-Processing realisiert ist, aus dem Verkehr zu ziehen und durch einen neuen Modulsatelliten zu ersetzen, der die Signalverarbeitung übernimmt.

In eine besonderen Ausgestaltung bauen die Kommunikationseinrichtungen mittels Laserstrahlen eine Übertragungsstrecke zwischen den Modulsatelliten auf. Die Kommunkationseinrichtungen umfassen dazu eine Lasersende- und eine Laserempfangseinrichtung.

Alternativ oder ergänzend bauen die Kommunikationseinrichtungen mittels Mikrowellen eine Übertragungsstrecke zwischen den Modulsatelliten (1, 2, 3) aufbauen. Die Kommunkationseinrichtungen umfassen dazu eine Mikrowellensende- und eine Mikrowellenempfangseinrichtung.

In einer vorteilhaften Ausgestaltung ist die Nutzlastkomponente eines ersten Modulsatelliten eine Empfangseinrichtung mit zumindest einer Emfangsantenne für den Empfang von Signalen und/oder Daten. Der erste Modulsatellit kann dann die erforderlichen Steuerkommandos von einer Bodenstation über die Empfangsantenne der Empfangseinrichtung empfangen.

Die Nutzlastkomponente eines zweiten Modulsatelliten kann eine Signalverarbeitungseinrichtung für die Verbarbeitung von Signalen und/oder Daten sein.

Die Nutzlastkomponente eines dritten Modulsatelliten ist dann eine Sendeeinrichtung mit zumindest einer Sendeantenne für das Senden von Signalen und/oder Daten ist. Der dritte Modulsatellit kann die erforderlichen Steuerkommandos von einer Bodenstation (4) über die Sendeantenne der Sendeeinrichtung (11) empfangen.

Die drei Nutzlastkomponenten, d.h die Empfangseinrichtung, die Signalverarbeitungseinrichtung und die Sendeeinrichtung der drei erfindungsgemäß ausgestalteten Modulsatelliten sind nur in ihrem Zusammenwirken brauchbar. Die Empfangseinrichtung des ersten Modulsatelliten empfängt ein von einer Bodenstation gesendetes Signal und überträgt das Signal an die Signalverarbeitungseinrichtung des zweiten Modulsatelliten, von der das verarbeitete Signal an die Sendeeinrichtung des dritten Modulsatelliten übertragen wird.

Im folgenden wird die Erfindung anhand eines Ausführungsbeispiels unter Bezugnahme auf die Zeichnungen erläutert, in denen zeigt:
- Fig. 1: ein erstes Ausführungsbeispiel eines modularen Satelliten bestehend aus zwei Modulsatelliten und
- Fig. 2: ein zweites Ausführungsbeispiel eines modularen Satelliten bestehend aus drei Modulsatelliten.

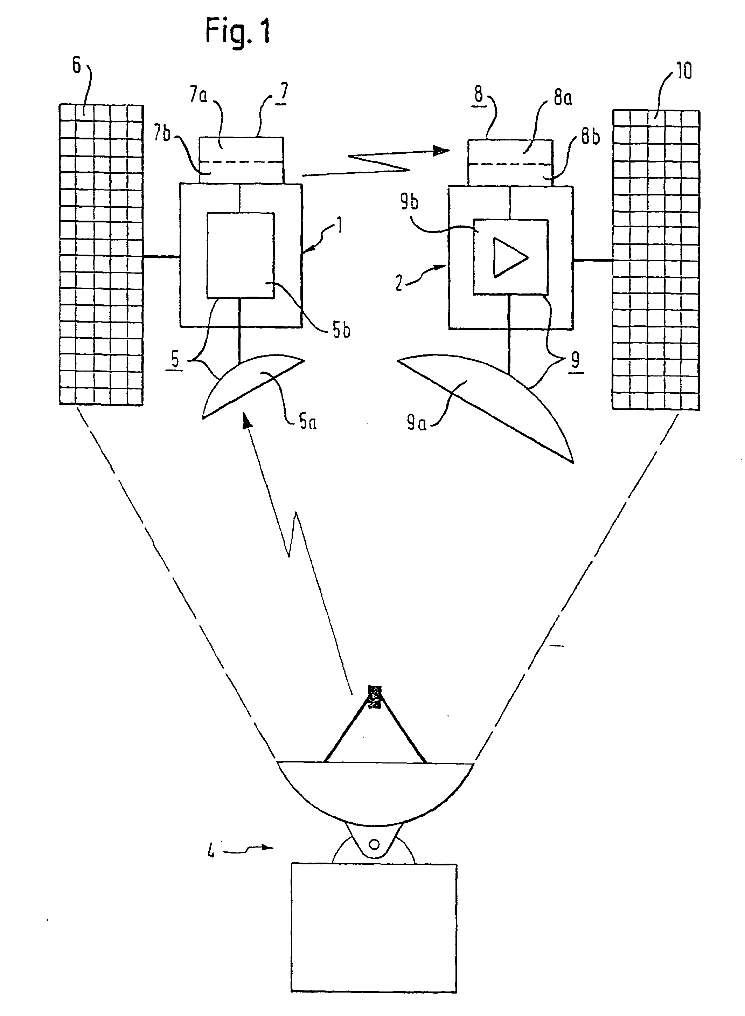

In Fig. 1 ist ein erstes Ausführungsbeispiel eines erfindungsgemäßen modularen Satelliten gezeigt, bei dem zwei Modulsatelliten 1, 2 vorgesehen sind. Der erste Modulsatellit 1 des Ausführungsbeispiels ist als Empfänger für die von einer Bodenstation 4 gesendeten Signale (Up-Link) ausgelegt. Er umfaßt eine Empfangseinrichtung 5, für die repräsentativ in Fig. 1 die Empfangsantenne 5a und ein Eingangsverstärker 5b dargestellt sind. Darüber hinaus ist der erste Modulsatellit 1 mit allen übrigen Komponenten ausgestattet, die erforderlich sind, um aus ihm einen eigenständigen Flugkörper zu machen, der von einer Bodenstation, z.B. der Bodenstation 4 aus kontrollierbar ist.

Für diese Komponenten, die eingangs bereits exemplarisch erwähnt wurden, ist in Fig. 1 das Sonnensegel 6 repräsentativ dargestellt. Insbesondere handelt es sich dabei um die Stromversorgung, die Lage-, Positions- und Temperaturregelung und das TT&C-Untersystem (Telemetry, Tracking and Command).

Erfindungsgemäß umfaßt der erste Modulsatellit 1 eine erste Kommunikationseinrichtung 7, mit der ein Kommunikationskanal zu einem zweiten Modulsatellliten 2 aufgebaut werden kann. Der zweite Modulsatellit 2 umfaßt dazu eine zweite Kommunikationseinrichtung 8, über die mit dem ersten Modulsatelliten 1 über die erste Kommunikationseinrichtung 7 Daten ausgetauscht und/oder Signale übertragen werden können. Die erste und die zweite Kommunikationseinrichtungen bestehen aus einer ersten Sendeeinrichtung 7a und einer ersten Empfangseinrichtung 7b bzw. einer zweiten Sendeeinrichtung 8a und einer zweiten Empfangseinrichtung 8b.

Der zweite Modulsatellit 2 umfaßt bei dem ersten Ausführungsbeispiel eine Sendeeinrichtung 9, die in Fig. 1 in erster Linie durch die Sendeantenne 9a repräsentiert wird, zu der aber auch u.a. ein Sendeverstärker 9b, zumeist mit einer Wanderfeldröhre (TWGT) gehört. Der zweite Modulsatellit 2 ist ebenso wie der erste Modulsatellit 1 mit allen erforderlichen Komponenten ausgestattet, die aus den zweiten Modulsatelliten 2 einen eigenständigen Flugkörper machen, der z.B. von der Bodenstation 4 aus kontrollierbar ist. Ebenso wie beim Modulsatelliten 1 ist in Fig. 1 für diese Komponenten des zweiten Modulsatelliten 2 repräsentativ lediglich das Sonnensegel 10 dargestellt, das für die zuvor bereits erwähnten Komponenten steht.

Erfindungsgemäß bilden erst die beiden Modulsatelliten 1, 2 gemeinsam einen aus Sicht der Bodenstation 4 nutzbaren Satelliten mit Empfangseinrichtung 5 und Sendeeinrichtung 10. Ein von der Bodenstation 4 gesendetes Signal wird von der Empfangseinrichtung 5 des ersten Modulsatelliten 1 empfangen und über die erste Kommunikationseinrichtung 7 an die Kommunikationseinrichtung 8 des zweiten Modulsatelliten 2 übermittelt. Die Sendeeinrichtung 10 des zweiten Modulsatelliten 2 sendet das Signal zur Erde.

Wenn Störungen an dem modularen Satelliten auftreten, der bei diesem Ausführungsbeispiel erfindungsgemäß aus den Modulsatelliten 1 und 2 besteht, kann der betroffene Modulsatellit aus dem Verbund manövriert werden, da es sich bei beiden Modulsatelliten erfindungsgemäß um eigenständig kontrollierbare Flugkörper handelt, und durch einen neuen Modulsatelliten mit entsprechender Nutzlastkomponente ersetzt werden. Dem erfindungsgemäßen Konzept entsprechend ist es lediglich erforderlich, den zu ersetzenden Modulsatelliten aus dem Verbund zu manövrieren und durch einen neuen Modulsatelliten zu ersetzen.

Aufgrund der heutzutage zur Verfügung stehenden Technik im TT&C-Bereich ist es ohne weiteres möglich zwei oder mehr Modulsatelliten in unmittelbarer Nähe zueinander oder in einem gewünschten Abstand zueinander im Orbit zu positionieren.

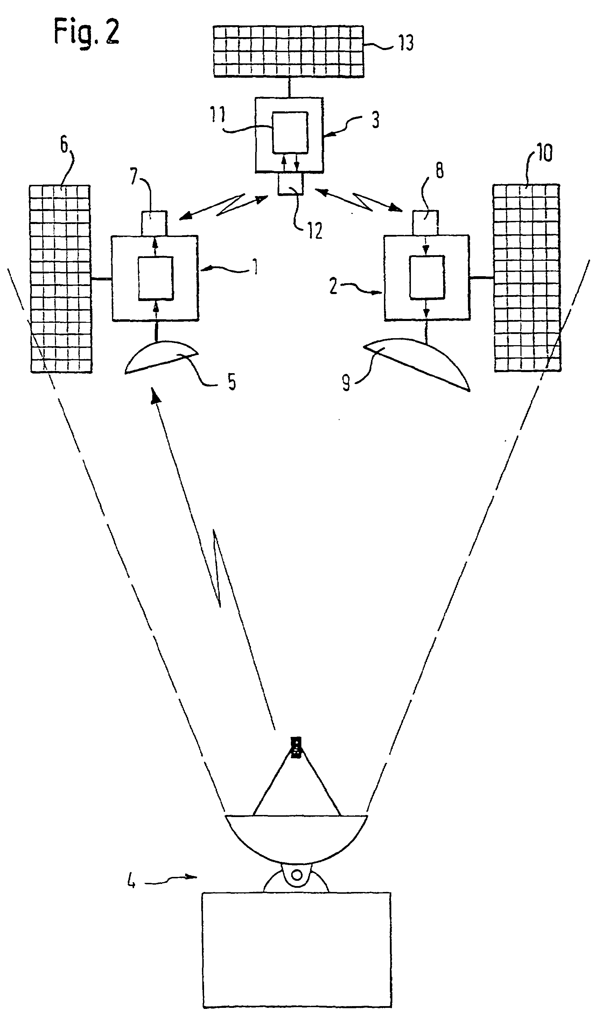

In Fig. 2 ist ein zweites Ausführungsbeispiel eines erfindungsgemäßen modularen Satelliten gezeigt, bei dem drei Modulsatelliten 1, 2, 3 vorgesehen sind. Der erste Modulsatellit 1 dieses Ausführungsbeispiels ist als Empfänger für die von einer Bodenstation 4 gesendeten Signale (Up-Link) ausgelegt. Er umfaßt eine Empfangseinrichtung 5, für die repräsentativ in Fig. 1 die Empfangsantenne dargestellt ist. Darüber hinaus ist der erste Modulsatellit 1 mit allen übrigen Komponenten ausgestattet, die erforderlich sind, um aus ihm einen eigenständigen Flugkörper zu machen, der von einer Bodenstation, z.B. der Bodenstation 4 aus kontrollierbar ist. Für diese Komponenten, die eingangs bereits exemplarisch erwähnt wurden, ist in Fig. 2 das Sonnensegel 6 repräsentativ dargestellt. Insbesondere handelt es sich dabei um die Stromversorgung, die Lage-, Positions- und Temperaturregelung und das TT&C-Untersystem (Telemetry, Tracking and Command).

Der zweite Modulsatellit 2 umfaßt bei dem zweiten Ausführungsbeispiel eine Sendeeinrichtung 9, die in Fig. 2 in erster Linie durch die Sendeantenne repräsentiert wird, zu der aber auch u.a. ein Sendeverstärker, zumeist mit einer Wanderfeldröhre (TWGT) gehört. Der zweite Modulsatellit 2 ist ebenso wie der erste Modulsatellit 1 mit allen erforderlichen Komponenten ausgestattet, die aus dem Modulsatelliten einen eigenständigen Flugkörper machen, der z.B. von der Bodenstation 4 aus kontrollierbar ist. Ebenso wie beim Modulsatelliten 1 ist in Fig. 2 für diese Komponenten des zweiten Modulsatelliten 2 repräsentativ lediglich das Sonnensegel 10 dargestellt, das für die zuvor bereits erwähnten Komponenten steht.

Bei dem Ausführungsbeispiel gem. Fig. 2 ist ein dritter Modulsatellit 3 vorgesehen, der als Nutzlast beispielsweise eine Signalverarbeitungseinrichtung 11 (On-Board-Processor), der die von einer dritten Kommunikationseinrichtung 12 des dritten Modulsatelliten 3 empfangenen Signale zugeführt werden. Die dritte Kommunikationseinrichtung 12 empfängt Signale/Daten von der ersten Kommunikationseinrichtung 7 des ersten Modulsatelliten. Die Signalverarbeitungseinrichtung 11 verarbeitet die Signale und übermittelt die verarbeiteten Signale über die dritte Kommunikationseinrichtung 12 des dritten Modulsatelliten 3 an den zweiten Modulsatelliten 2 über dessen Kommunikationseinrichtung 8. Der dritte Modulsatellit 3 ist ebenso wie der erste Modulsatellit 1 mit allen erforderlichen Komponenten ausgestattet, die aus dem Modulsatelliten einen eigenständigen Flugkörper machen, der z.B. von der Bodenstation 4 aus kontrollierbar ist. Ebenso wie beim Modulsatelliten 1 ist in Fig. 2 für diese Komponenten des dritten Modulsatelliten 3 repräsentativ lediglich das Sonnensegel 13 dargestellt, das für die zuvor bereits erwähnten Komponenten steht.

Erfindungsgemäß bilden erst die drei Modulsatelliten 1, 2, 3 dieses Ausführungsbeispiels gemeinsam einen aus Sicht der Bodenstation 4 nutzbaren Satelliten mit Empfangseinrichtung, Signalverarbeitungseinrichtung und Sendeeinrichtung. Ein von der Bodenstation 4 gesendetes Signal wird von der Empfangseinrichtung 5 des ersten Modulsatelliten 1 empfangen und über die Kommunikationseinrichtung 7 and die Kommunikationseinrichtung 12 des dritten Modulsatelliten 3 übermittelt. Von dort gelangt das Signal zu der Signalverarbeitungseinrichtung 11, von der aus das Signal dann über die Kommunikationseinrichtung 12 an die Kommunikationseinrichtung 8 des zweiten Modulsatelliten 2 übermittelt wird. Die Sendeeinrichtung 9 des zweiten Modulsatelliten 2 sendet das Signal zur Erde.

Wenn sich die Anforderungen an die Signalverarbeitung im Laufe der Lebensdauer des modularen Satelliten, der bei diesem Ausführungsbeispiel erfindungsgemäß aus den Modulsatelliten 1, 2 und 3 besteht, ändern sollten, kann der zweite Modulsatellit 2 aus dem Verbund manövriert werden, da es sich bei dem Modulsatelliten 2 erfindungsgemäß um einen eigenständig kontrollierbaren Flugkörper handelt, und durch einen neuen Modulsatelliten mit Signalverarbeitungseinrichtung ersetzt werden. Das gleiche gilt für den ersten Modulsatelliten 1 und den dritten Modulsatelliten 3, die ebenso wie der zweite Modulsatellit 2 auch bei Störungen oder Ablauf der Lebensdauer ersetzt werden können. Dem erfindungsgemäßen Konzept entsprechend ist es lediglich erforderlich, den zu ersetzenden Modulsatelliten aus dem Verbund zu manövrieren und durch einen neuen Modulsatelliten zu ersetzen.

Der erfindungsgemäße modulare Satellit realisiert ein effektiveres Redundanzkonzept, da nicht nur defekte Modulsatelliten ausgetauscht werden können, sondern einzelne Modulsatelliten auch auf wirtschaftliche Weise vorbeugend instandgesetzt werden können. Das erfindungsgemäße Konzept bietet eine höhere Flexibilität als die bekannten herkömmlichen Satellitenkonzepte. So kann Funktionalität jederzeit hinzugefügt oder weggenommen werden. Technologisch überholte Module können ergänzt oder ausgetauscht werden. Die Satellitenlebensdauer und der Technologiefortschritt können deshalb aufeinander abgestimmt werden. Wesentlich ist auch, daß komplexe und dadurch heute nicht zu realisierende Satelliten im herkömmlichen Sinne nach dem erfindungsgemäßen Konzept modular aufgebaut werden und im Orbit zu einer funktionierenden Einheit zusammengesetzt werden. Module sind an derselben Orbitalposition co-positioniert. Durch das erfindungsgemäße Konzept sind auch auf einfachem Wege Spot-Beam-Modulsatelliten realisierbar, die bestimmte Bereiche auf der Erde ausleuchten und denen über die jeweils vorgesehene Kommunikationseinrichtung die entsprechenden Signale zugeführt werden.

Die Kommunikationseinrichtungen 7, 8 und 9 der Modulsatelliten 1, 2 und 3 der in Fig. 1 und 2 gezeigten Ausführungsbeispiele sind auf unterschiedliche Weise realisierbar. Beispielsweise kann eine auf Laserstrahlen oder Mikrowellen basierende Übertragungsstrecke aufgebaut werden. Im Hinblick auf die sehr kurzen Distanzen sind für diese zusätzlichen Sende- und Empfangsvorgänge nur geringe Leistungen zusätzlich bereitzustellen.

In Abweichung von den hier beschriebenen Ausführungsbeispielen kann ein modularer Satellit erfindungsgemäß auch mit mehr als zwei oder drei Modulsatelliten realisiert werden. Welche Nutzlast die Modulsatelliten tragen, kann dabei wahlfrei nach technischen und wirtschaftlichen Kriterien beurteilt und festgelegt werden. Entscheidend ist, daß aus der Sicht der Bodenstation der erfindungsgemäße modulare Satellit erst durch das Zusammenwirken der Modulsatelliten die gewünschte Funktionalität bereitstellt.

In vorteilhafter Abweichung von dem zweiten Ausführungsbeispiel können die Empfangseinrichtung (5), die in dem zweiten Ausführungsbeispiel auf dem ersten Modulsatelltien (1) angeordnet ist, und die Sendeeinrichtung (9), die auf dem zweiten Modulsatelliten (2) angeordnet ist, auch auf einem (ersten) Modulsatelliten zusammengefaßt werden. Der die Signalverarbeitung breitstellende Modulsatellit (3) ist dann ein weiterer (zweiter) Modulsatellit des erfindungsgemäßen modularen Satelliten. Wenn sich die Anforderungen an die Signalverarbeitung (On-Board-Processing) ändern, kann und muß nur dieser Modulsatellit ausgestauscht werden, während die langlebigen Sende- und Empfangseinrichtungen weiter genutzt werden.

An dem in Fig. 2 gezeigten dritten Modulsatelliten des zweiten Ausführungsbeispiels ist vorzugsweise eine Empfangsantenne für die TT&C Signale vorzusehen, die von der Bodenstation aus zur Kontrolle des Modulsatelliten gesendet werden. Die bei den Ausführungsbeispielen gem. Fig. 1 und 2 gezeigten ersten und zweiten Modulsatelliten 1 und 2 können die Kontrollsignale von der Bodenstation über die Empfangsantenne der Empfangseinrichtung 5 bzw. die Sendeantenne der Sendeeinrichtung 9 empfangen. In der Regel besitzen aber die erfindungsgemäßen Modulsatelliten die von herkömmlichen Satelliten bekannten Antennen für den Empfang / das Senden von TT&C-Signalen/Daten. Diese Antennen werden oft als Omni-Antennen bezeichnet, da sie über eine Rundum-Charakteristik verfügen. Denn nach dem Abkoppeln von der Trägerrakete ist nicht sichergestellt, daß die Haupt-Sende- und Empfangsantenne so ausgerichtet ist, daß der Satellit von der Bodenstation aus gesteuert werden kann. Nach der Positionierung im Orbit kann die Haupt-Antenne für TT&C-Zwecke genutzt werden.

## Patentansprüche

1. Satellitenverband, bestehend aus mindestens zwei Modulsatelliten, die auf derselben Orbitalposition co-positioniert sind,
mit einem ersten Modulsatelliten (1, 2), der eine Empfangseinrichtung (5) zum Empfang von gesendeten Signalen einer Bodenstation (4) und/oder eine Sendeeinrichtung (9) zum Zurücksenden der Signale auf die Erde aufweist, und der eine erste Kommunikationseinrichtung (7, 8) zum Zusammenwirken mit Kommunikationseinrichtungen weiterer Modulsatelliten aufweist,
mit einem zweiten Modulsatelliten (3), der eine Signalverarbeitungseinrichtung (11) aufweist und der eine zweite Kommunikationseinrichtung (12) zum Zusammenwirken mit Kommunikationseinrichtungen weiterer Modulsatelliten aufweist,
wobei die zweite Kommunikationseinrichtung (12) Signale von der ersten Kommunikationseinrichtung (7, 8) zur Verarbeitung durch die Signalverarbeitungseinrichtung empfängt und wobei die zweite Kommunikationseinrichtung (12) die verarbeiteten Signale an eine Kommunikationseinrichtung eines anderen Modulsatelliten übermittelt, und
wobei jeder Modulsatellit als eigenständiger Flugkörper von der Bodenstation derart kontrollierbar ist, dass ein beliebiger Modulsatellit aus dem Verband manövrierbar und durch einen neuen Modulsatelliten ersetzbar ist.

2. Satellitenverband nach Anspruch 1, **dadurch gekennzeichnet, daß** die Empfangseinrichtung (5) eine Empfangsantenne (5a) und die Sendeeinrichtung (9) eine Sendeantenne aufweisen und dass die Empfangseinrichtung (5) und die Sendeeinrichtung (9) in verschiedenen Modulsatelliten integriert sind.

3. Satellitenverband nach Anspruch 2, **dadurch gekennzeichnet, dass** die Sendeeinrichtung (9) in einem Spot-Beam-Modulsatelliten realisiert ist.

4. Satellitenverband nach Anspruch 2 oder 3, **dadurch gekennzeichnet, dass** die Empfangsreinrichtung Steuerkommandos von einer Bodenstation über die Empfangsantenne und die Sendeeinrichtung Steuerkommandos von einer Bodenstation über die Sendeantenne empfängt.

5. Satellitenverband nach einem der Ansprüche 1 - 4, **dadurch gekennzeichnet, dass** die Übertragungsstrecke zwischen der ersten Kommunikationseinrichtung (7, 8) und der zweiten Kommunikationseinrichtung (12) auf Laserstrahlen basiert.

6. Satellitenverband nach einem der Ansprüche 1 - 4, **dadurch gekennzeichnet, dass** die Übertragungsstrecke zwischen der ersten Kommunikationseinrichtung (7, 8) und der zweiten Kommunikationseinrichtung (12) auf Mikrowellen basiert.

7. Verfahren zum Betreiben eines Satellitenverbandes nach einem der Patentansprüche 1 - 6 von einer Bodenstation, bei dem jeder Modulsatellit als eigenständiger Flugkörper von der Bodenstation auf derselben Orbitalposition kontrolliert wird und
bei dem ein auszutauschender Modulsatellit aus dem Verband manövriert wird und durch einen neuen Modulsatelliten ersetzt wird.

## Claims

1. Satellite cluster having at least two module satellites co-positioned at the same orbital position, comprising:
a first module satellite (1, 2), having a receiver unit (5) for receiving signals which are sent out by an earth station (4) and/or having a transmitter unit (9) for sending signals back to earth and having a first communication device (7, 8) for interacting with communication devices of other module satellites, and
a second module satellite (3), having a signal processing unit (11) and having a second communication device (12) for interacting with communication devices of other module satellites,
wherein the second communication device (12) receives signals from the first communication device (7, 8) for processing by the signal processing unit, and wherein the second communication device (12) forwards the processed signals to the communication device of at least one other module satellite, and
wherein each module satellite is controllable separately as an aerospace vehicle by an earth station such that each respective module satellite is manoeuvrable out of the cluster and is replaceable by a new module satellite.

2. Satellite cluster according to claim 1, **characterized in that** the receiver unit (5) has a receiver antenna (5a) and the transmitter unit (9) has a transmission antenna and that the receiver unit (5) and the transmitter unit (9) are integrated in different module satellites.

3. Satellite cluster according to claim 2, **characterized in that** the transmitter unit (9) is located in a spot beam module satellite.

4. Satellite cluster according to claim 2 or 3, **characterized in that** the receiver unit receives control commands from a base station via the receiver antenna and the transmitter unit receives control commands from a base station via the transmission antenna.

5. Satellite cluster according to one of the claims 1 - 4, **characterized in that** the first communication device (7, 8) and the second communication device (12) are based on a communication by laser beams.

6. Satellite cluster according to one of the claims 1 - 4, **characterized in that** the first communication device (7, 8) and the second communication device (12) are based on a communication by microwaves.

7. Method for operating a satellite cluster according to one of the claims 1 - 6 from a base station,
in which each module satellite is controlled separately as an aerospace vehicle by an earth station at the same orbital position, and
in which a module satellite to be substituted is manoeuvred out of the cluster and is replaced by a new module satellite.

## Revendications

1. Ensemble coordonné de satellites, formé d'au moins deux satellites modulaires, qui sont co-positionnés sur la même position orbitale,
avec un premier satellite modulaire (1, 2), présentant un dispositif récepteur (5), pour la réception des signaux émis d'une station au sol (4), et/ou un dispositif émetteur (9), pour la réémission des signaux à la terre, et qui présente un premier dispositif de communication (7, 8) devant coopérer avec des dispositifs de communication appartenant à d'autres satellites modulaires,
avec un deuxième satellite modulaire (3), qui présente un dispositif de traitement des signaux (11) et qui présente un deuxième dispositif de communication (12), devant coopérer avec des dispositifs de communication appartenant à d'autres satellites modulaires.
le deuxième dispositif de communication (12) captant des signaux venant du premier dispositif de communication (7, 8), pour traitement par le dispositif de traitement des signaux, et le deuxième dispositif de communication (12) transmettant les signaux traités à un dispositif de communication appartenant à un autre satellite modulaire, et
chaque satellite modulaire étant susceptible d'être contrôlé en tant que mobile aérien autonome depuis la station au sol, de manière qu'un satellite modulaire quelconque soit susceptible d'être manoeuvré à partir de l'ensemble coordonné et soit susceptible d'être remplacé par un nouveau satellite modulaire.

2. Ensemble coordonné de satellites selon la revendication 1, **caractérisé en ce que** le dispositif récepteur (5) présente une antenne réceptrice (5a), et le dispositif émetteur (9) présente une antenne émettrice, et **en ce que** le dispositif récepteur (5) et le dispositif émetteur (9) sont intégrés dans des satellites modulaires différents.

3. Ensemble coordonné de satellites selon la revendication 2, **caractérisé en ce que** le dispositif émetteur (9) est réalisé en un satellite modulaire de type spot-beam.

4. Ensemble coordonné de satellites selon la revendication 2 ou 3, **caractérisé en ce que** le dispositif récepteur reçoit des instructions de commande venant d'une station au sol, par l'intermédiaire de l'antenne réceptrice, et le dispositif émetteur reçoit des instructions de commande venant d'une station au sol, par l'intermédiaire de l'antenne émettrice.

5. Ensemble coordonné de satellites selon l'une des revendications 1 à 4, **caractérisé en ce que** la voie de transmission, entre le premier dispositif de communication (7, 8) et le deuxième dispositif de communication (12) est basée, sur des rayons laser.

6. Ensemble coordonné de satellites selon l'une des revendications 1 à 4, **caractérisé en ce que** la voie de transmission, entre le premier dispositif de communication (7, 8) et le deuxième dispositif de communication (12), est basée sur des micro-ondes.

7. Procédé d'exploitation d'un ensemble coordonné de satellites selon l'une des revendications 1 à 6, depuis une station au sol,
dans lequel chaque satellite modulaire est contrôlé sur la même position orbitale, en tant que mobile aérien autonome, depuis la station au sol, et
dans lequel un satellite modulaire à remplacer, issu de l'ensemble coordonné, est l'objet d'une manoeuvre et est remplacé par un nouveau satellite modulaire.
